# EUROPEAN PATENT APPLICATION

(11) **EP 2 832 403 A1**
(43) Date of publication of application: **04.02.2015**
(21) Application number: 13199371.9
(22) Date of filing: 23.12.2013
(51) Int. Cl.: A63B 49/08, A63B 53/14, A63B 59/00, B62K 21/26

(54) **Handlebar grip**

(30) Priority: 29.07.2013 US 201313953654
(71) Applicant: Extreme Steering, Inc., Phelan, CO 92329 (US)
(72) Inventor: Stewart, Gary, Phelan, CA California 92329 (US)
(74) Representative: Instone, Alicia Claire

(57) **Abstract**

A handlebar grip (10) is disclosed that is formed from a strip (14) of silicone. The strip (14) of silicone is stretchable so that the strip of silicone may be stretched to varying degrees around the handlebar (12) for adjusting the density or hardness of the handlebar grip (10). The strip (14) of silicone additionally has overlapping mating surfaces (16,18) that engage one another and mitigate protruding ridges from the handlebar grip (10).

## Description

### BACKGROUND

The various embodiments and aspects described herein relate to a handlebar grip.

Handlebar grips of a bicycle comprise two of five different interfaces between a rider and the bicycle. In particular, the rider controls the bicycle by way of left and right handlebar grips, left and right pedals and the seat. Each of the handlebar grips for bicycles is provided as a unitary structure. One unitary structure is slipped onto the left side of the handlebar. Another unitary structure is slipped onto the right side of the handlebar. These unitary structures form the left and right handlebar grips that the rider will hold onto in order to control the bicycle.

The handlebar grips are held on by the hands of the rider with sufficient strength to provide control and prevent the handlebars from being pulled away from the user's hands during riding. This is especially true in the sport of mountain biking where the rider may traverse downhill over rocky terrain. However, the handlebar grips should not be gripped so tightly that blood does not flow through the rider's hands during riding. The rider may inadvertently grip the handlebar grips too tightly for various reasons. Additionally, it is difficult to place the unitary structures over the distal ends of the handlebar since the unitary structures must not slip off during use. In order to prevent the unitary structures from slipping off of the handlebar, mechanical locks such as a collar with the set screw have been used to secure the unitary structures onto the handlebar. Unfortunately, the collar and set screw provide a hard surface upon which the user may grip during use. Also, the inner hole is sized to have a frictional attachment to the handlebar. Hence, it may be difficult to push the unitary structure on the handlebar.

Accordingly, there is a need in the art for an improved handlebar grip.

### BRIEF SUMMARY

The handlebar grip disclosed herein addresses the needs discussed above, discussed below and those that are known in the art.

The handlebar grip disclosed herein may be a strip of silicone that can be stretched longitudinally when being wrapped around the handlebar to a particular density to adjust the feel of the handlebar grip to the rider. It has been found that riders may grip the handlebar grip tighter when the grip is too soft in order to compensate for the soft feel of the grip. Unfortunately, gripping the handlebar grip too tightly will cut off circulation and cause other problems for the rider. By being able to stretch the strip of silicone more to increase the density of the handlebar grip or stretch the strip of silicone less to decrease the density of the handlebar grip, it is possible for the installer to adjust the hardness or density of the handlebar grip so that the rider will subconsciously apply the proper amount of gripping force to the handlebar to control the bicycle and yet prevent the handlebars from uncontrollably being pulled away from the rider's hands. Additionally, the strip of silicone may have overlapping mating surfaces that are configured to mate with each other so that the exposed surfaces of the strip of silicone (i.e. the gripping surface) are leveled to adjacent exposed surfaces of the strip of silicone. In this manner, ridges are not formed along the length of the grip on the handlebar. The grip is smooth when gripped.

More particularly, a grip for wrapping a handlebar of a bicycle is disclosed. The grip may comprise an elongate strip of silicone. The strip may be stretched when installed on the handlebar to modify the compressibility of the strip to a desired level to mitigate pain in a rider's hands and arms. The elongate strip of silicone may define a central axis midway along a length of the elongate strip of silicone, an upper surface, a lower surface, first overlapping surface and an opposed second overlapping surface. The upper surface may engage a hand of the rider when the strip is installed on the handlebar of the bicycle. The lower surface may engage the handlebar of the bicycle when the strip is installed on the handlebar of the bicycle. The opposed second overlapping surface may have a mating configuration to the first overlapping surface.

The first and second overlapping surfaces may have a slanted orientation so that a cross sectional configuration of the elongate strip is a parallelogram. The first overlapping surface may have a mirror image compared to the second overlapping surface with respect to the central axis. The first and second overlapping surfaces may be flat. However, it is also contemplated that the first overlapping surface may have a groove and the second overlapping surface may have a nub.

In another aspect, a method of wrapping a handlebar of a bicycle with a handlebar grip is disclosed. The method may comprise the steps of securing a first end of an elongate strip of silicone to a first portion of the handlebar; aligning a first overlapping surface of the elongate strip of silicone to a second overlapping surface; wrapping the elongate strip of silicone around the handlebar with the first overlapping surface contacting and aligned to the second overlapping surface; and securing a second end of the elongate strip of silicone to a second portion of the handlebar.

The securing the first end step may include the step of wrapping the upper and lower surfaces upon each other. The aligning step may include the step of overlapping the first overlapping surface solely to the second overlapping surface. The upper surface edges may be matched to within 1/8 inch or less after the handlebar is wrapped with the elongate strip of silicone. The securing the second end step may include the steps of disposing the second end of the strip of silicone through an end hole of the handlebar and placing an end cap into the end hole.

The method may further comprise the step of taping the first end of the strip of silicone to the first portion of the handlebar. The method may also further comprise the step of stretching the strip of silicone to a selected degree during the wrapping step to adjust a hardness of the grip.

### BRIEF DESCRIPTION OF THE DRAWINGS

These and other features and advantages of the various embodiments disclosed herein will be better understood with respect to the following description and drawings, in which like numbers refer to like parts throughout, and in which:
Figure 1 is a perspective view of a handlebar of a road bicycle wrapped with a strip of silicone for forming a grip around the handlebar;
Figure 2 is a perspective view of the handlebar of a mountain bicycle wrapped with a strip of silicone for forming the grip around the handlebar;
Figure 3 is a perspective view of the strip of silicone for forming the grip around the handlebar of the road bicycle or the mountain bicycle as shown in Figures 1 and 2;
Figure 4 is a cross-sectional view of the strip of silicone illustrating a parallelogram configuration;
Figure 4A is a second embodiment of the cross-sectional view of the strip of silicone;
Figure 4B is a third embodiment of the cross-sectional view of the strip of silicone;
Figure 5A is a cross-sectional view of the strip of silicone wrapped around the handlebar with upper surfaces leveled to each other;
Figure 5B is a cross-sectional view of the strip of silicone wrapped around the handlebar with a first upper surface gapped away with respect to a second upper surface; and
Figure 5C is a cross-sectional view of the strip of silicone wrapped around the handlebar with the first upper surface overlapped to the second upper surface

### DETAILED DESCRIPTION

Referring now to the drawings, a grip 10 for a handlebar 12 is shown. The grip 10 is put on the handlebar 12 of a bicycle as a single elongate strip 14 of silicone on each side of the handlebar 12. The strip 14 of silicone has opposed mating overlapping surfaces 16, 18 that run the entire length of the strip 14 of silicone. When the strip 14 of silicone is wrapped around the handlebar 12, the strip 14 is overlapped upon itself solely at the opposed mating overlapping surfaces 16, 18 so that the exterior surface 20 of the grip 10 does not have protruding ridges extending above the exterior surface 34 of the grip 10. Moreover, when wrapping the strip 14 of silicone around the handlebar 12, the strip 14 of silicone may be stretched to increase the density of the strip 14 of silicone to a level greater than the density when the strip 14 of silicone is not stretched. The increased density of the strip 14 of silicone that forms the grip 10 on the handlebar 12 is adjustable to the user's requirement and provides for a desired hardness to the rider. If the grip 10 is too soft, then the strip of silicone 14 may be removed and re-wrapped around the handlebar 12 while stretching the strip 14 of silicone to a greater extent than before. Conversely, if the grip 10 is too hard, then the strip 14 of silicone may be removed and rewrapped around the handlebar 10 while stretching the strip 14 of silicone to a lesser extent than before.

The grip 10 may be formed out of an elongate strip 14 of silicone. The elongate strip 14 of silicone may be sufficiently long to wrap the handlebar 12 by overlapping the mating overlapping surfaces 16, 18 upon each other from a first portion 22 of the handlebar 12 to a second portion 24 of the handlebar 12. The strip 14 of silicone may be altered to have a greater or lesser density by stretching the strip 14 of silicone to a particular degree while wrapping the handlebar 12. By changing the density of the strip 14 of silicone, the grip 10 may be made harder or softer depending on the rider's gripping habits.

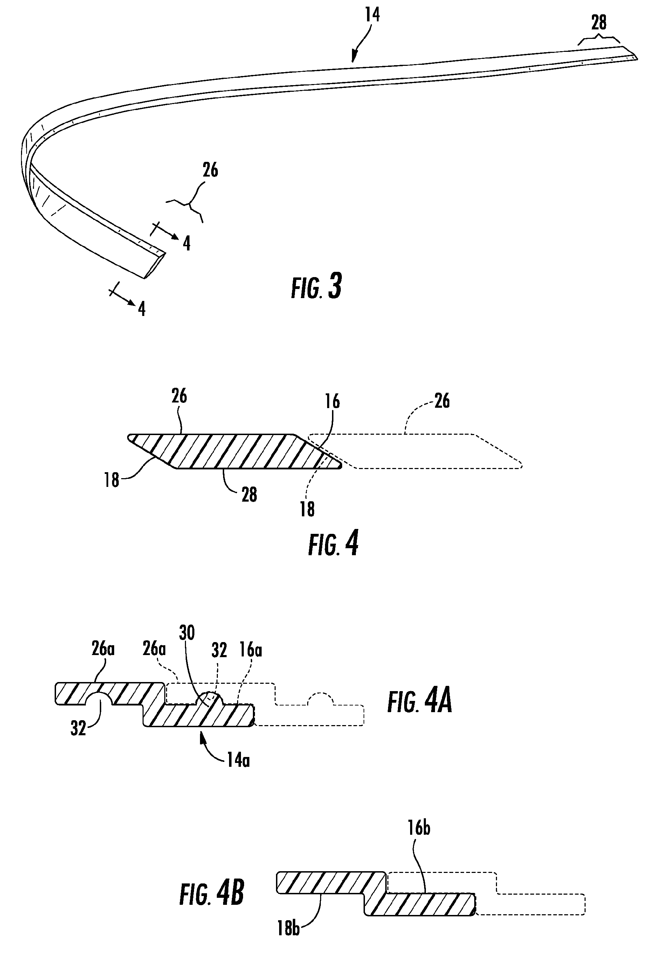

The strip 14 of silicone may be provided to the end-user as a single long piece, as shown in Figure 3. The opposed distal end portions 26, 28 are shown as being chopped off (i.e., squared) but may be provided to the end-user in other configurations such as tapered, wedged, etc. The strip 14 of silicone may define upper and lower surfaces 26, 28, as shown in Figure 4. The strip 14 of silicone is wrapped around the handlebar 12 so that the upper surface 26 contacts the end-user's hand. The upper surface 26 is shown as being flat but may be fabricated with other designs including but not limited to dimples, protrusions, fins along the length of the strip 14, etc. The upper surface 26 may have a coefficient of friction sufficient to provide a nonslip surface to the rider's hand. The lower surface 28 may also be flat and provide sufficient static friction with the exterior surface 20 of the handlebar 12 so that the grip 10 does not slip while riding the bicycle.

Preferably, the upper and lower surfaces 26, 28 do not have any adhesive applied thereto. The strip 14 of silicone when wrapped around the handlebar 12 is held onto the handlebar 12 solely by the friction created between the lower surface 28 of the strip 14 of silicone and the exterior surface 20 of the handlebar 12. Accordingly, there is no need to lock the strip 14 onto the handlebar 12 with a securing mechanism such as an adhesive or a mechanical lock such as a collar and set screw..

The strip 14 of silicone also has opposed mating overlapping surfaces 16, 18. As the strip 14 of silicone is being wrapped around the handlebar 12, the strip 14 of silicone is being stretched and wrapped around the handlebar 12 while aligning the second overlapping surface 18 on to the first overlapping surface 16. The adjacent upper surface 26 of the wrapped strip 14 of silicone is preferably at the same level so that the grip 10 does not have any protruding ridges 34. The user continues to wrap the handlebar 12 with the strip 14 of silicone while aligning the second overlapping surface 18 to the first overlapping surface 16 along the entire length of the strip 14 of silicone. The strip 14 of silicone is consistently stretched to the same degree throughout the entire wrap so that the grip 10 may have a consistent feel throughout the entire length of the grip 10.

The strip 14 of silicone is preferably shown as having a cross-sectional configuration of a parallelogram in Figure 4. However, it is also contemplated that other configurations may be implemented as shown in Figures 4A - 4B. In Figure 4A, the first surface 16a is shown as having an extended nub 30 or tongue that fits within an extended groove 32 along the length of the strip 14. The extended nub 30 and the extended groove 32 may run the entire length of the strip 14 of silicone. As shown, the upper surfaces 26a of the wrapped strip 14a of silicone are at the same level to minimize or eliminate any protruding rigdes 34 in the grip 10. The strip 14a may also be stretched to a desired density as desired by the user. Figure 4B illustrates another configuration for the first and second overlapping surfaces 16b, 18b.

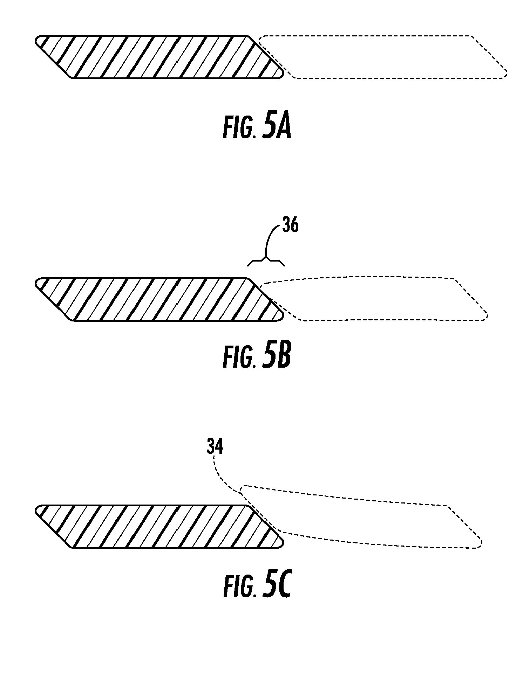

Although the embodiments discussed herein contemplate the upper surfaces 26 of the wrapped strip 14 being at the same level, it is also contemplated that protruding ridges 34 may be formed on the upper surfaces 26 by overlapping the second surface 18 over the upper surface 26 to create desired protruding ridges 34, as shown in Figure 5A. Furthermore, it is also contemplated that the second surface 18 may not perfectly align with the first surface 16 so as to form a gap 36 between the upper surfaces 26 of the wrapped strip 14, as shown in Figure 5B.

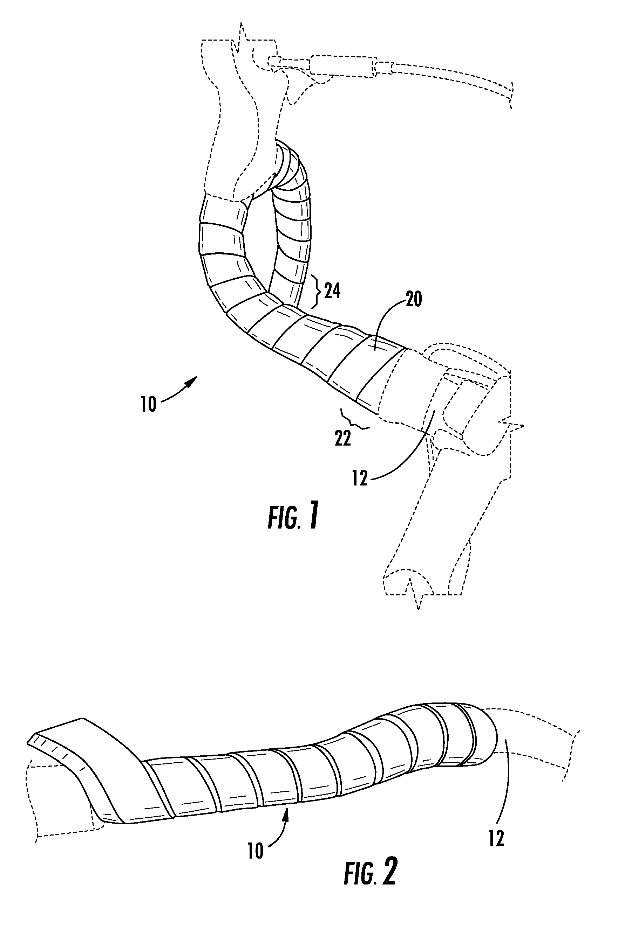

To mount the strip 14 of silicone onto the handlebar 12, the end portion of the strip 14 of silicone may be wrapped upon itself so that the end of the strip 14 of silicone does not unravel. The user continues to wrap the strip 14 of silicone around the handlebar 12 while aligning the second overlapping surface 18 to the first overlapping surface 16. By aligning the first and second overlapping surfaces 16, 18, the strip 14 of silicone does not unravel. Moreover, the lower surface 28 is formed so as to have a sufficient coefficient of friction with the exterior surface 20 of the handlebar 12 to prevent slipping as the rider grips the grip 10 during use. At the second end of the strip 14, the strip 14 of silicone may be cut to remove excess and tucked into the handlebar while being plugged to hold the second end of the strip 14 in place. The same process may be used for a road bicycle handlebar 12 as shown in Figure 1 or a mountain bike handlebar 12 as shown in Figure 2.

Although the strip 14 has been described with the upper surface 26 engaging the rider's hand and the lower surface 28 engaging the handlebar 12, it is also contemplated that the lower surface 28 may engage the rider's hand and the upper surface 26 may engage the handlebar 12. In use, the strip 14 may initially be wrapped around the handlebar 12 with the lower surface 28 engaging the handlebar 12. However, after some use, the upper surface 28 may become worn or soiled. The strip 14 may be removed from the handlebar 12, flipped over and rewrapped around the handlebar 12 with the upper surface 26 engaging the handlebar 12. The lower surface 28 will now engage the rider's hand.

The strip 14 of silicone was discussed herein in relation to a handlebar 12 of the bicycle to form a handlebar grip 10. However, the strip 14 of silicone may be wrapped around other types of handlebars 12. By way of example and not limitation, the strip of silicone 14 may be wrapped around a refrigerator handle, a machinery handle, an extension bar of the bicycle, and any other types of elongate members that are gripped by a user's hand either intermittently or during long durations such as in the case of bicycles. Additionally, the strip 14 was described herein as being fabricated from silicone. However, it is also contemplated that other types of materials may be used to form the strip 14. By way of example and not limitation, the strip may be fabricated from an elastomer, and other material so long as the strip 14 may be stretched to alter the density of grip 10 while wrapping the strip 14 around the handlebar and there is sufficient coefficient of friction between the strip 14 at the handlebar 12 as well as between the strip 14 and the rider's hand.

The above description is given by way of example, and not limitation. Given the above disclosure, one skilled in the art could devise variations that are within the scope and spirit of the invention disclosed herein, including various ways of securing the starting and ending portions of the strip 14 to the handlebar 12. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A grip for wrapping a handlebar of a bicycle, the grip comprising:
an elongate strip of silicone, the strip being stretched when installed on the handlebar to modify the compressibility of the strip to a desired level to mitigate pain in a rider's hands and arms, the elongate strip of silicone defining a central axis midway along a length of the elongate strip of silicone, an upper surface, a lower surface, first overlapping surface and an opposed second overlapping surface, the upper surface engages a hand of the rider when the strip is installed on the handlebar of the bicycle, the lower surface engages the handlebar of the bicycle when the strip is installed on the handlebar of the bicycle, the opposed second overlapping surface having a mating configuration to the first overlapping surface.

2. The grip of Claim 1 wherein first and second overlapping surfaces have a slanted orientation so that a cross sectional configuration of the elongate strip is a parallelogram.

3. The grip of Claim 1 or Claim 2 wherein the first overlapping surface has a groove and the second overlapping surface has a nub.

4. The grip of any of claims 1 to 3 wherein the first overlapping surface has a mirror image compared to the second overlapping surface with respect to the central axis.

5. A method of wrapping a handlebar of a bicycle with a handlebar grip, the method comprising the steps of:
securing a first end of an elongate strip of silicone to a first portion of the handlebar;
aligning a first overlapping surface of the elongate strip of silicone to a second overlapping surface;
wrapping the elongate strip of silicone around the handlebar with the first overlapping surface contacting and aligned to the second overlapping surface;
securing a second end of the elongate strip of silicone to a second portion of the handlebar.

6. The method of Claim 5 wherein the securing the first end step includes the step of wrapping the upper and lower surfaces upon each other.

7. The method of Claim 5 or Claim 6 further comprising the step of taping the first end of the strip of silicone to the first portion of the handlebar.

8. The method of any of claims 5 to 7 wherein the aligning step includes the step of solely overlapping the first overlapping surface to the second overlapping surface.

9. The method of any of claims 5 to 8 wherein the upper surface edges are matched to within 1/8 inch after the handlebar is wrapped with the elongate strip of silicone.

10. The method of any of claims 5 to 9 further comprising the step of stretching the strip of silicone to a selected degree during the wrapping step.

11. The method of any of claims 5 to 10 wherein the securing the second end includes the steps of disposing the second end of the strip of silicone through an end hole of the handlebar and placing an end cap into the end hole.
